# EUROPÄISCHE PATENTSCHRIFT

(11) **EP 1 690 889 B1**
(45) Veröffentlichungstag und Bekanntmachung des Hinweises auf die Patenterteilung: **23.07.2008**
(21) Anmeldenummer: 05112991.4
(22) Anmeldetag: 27.12.2005
(51) Int. Cl.: C08J 5/10, C08K 5/098

(54) **Verfahren zur Herstellung von Formteilen unter Erhöhung der Schmelzesteifigkeit**
Process for the preparation of moulded parts under increased melt rigidity
Procédé de fabrication de pièces moulées avec une résistance à la fusion accrue

(30) Priorität: 15.02.2005 DE 102005007035
(43) Veröffentlichungstag der Anmeldung: 16.08.2006
(73) Patentinhaber: Evonik Degussa GmbH, 40474 Düsseldorf (DE)
(72) Erfinder: Dowe, Andreas, 46325, Borken (DE); Göring, Rainer, 46325, Borken (DE); Bollmann, Sonja, 45721, Haltern am See (DE); Baumann, Franz-Erich, Dr., 48249, Dülmen (DE)

(56) Entgegenhaltungen:
- EP-A- 1 512 710
- WO-A-00/66650

## Beschreibung

Die vorliegende Erfindung betrifft ein Verfahren zur Herstellung von Formteilen unter Erhöhung der Schmelzesteifigkeit bei der Verarbeitung von Polyamiden.

Polyamide sind Makromoleküle, die in der Hauptkette die Gruppierung -CO-NH- enthalten. Man erhält sie entweder aus zwei verschiedenen bifunktionellen Monomerbausteinen, von denen jeder zwei gleiche reaktive Gruppen, z. B. -NH₂ bzw. -COOH, enthält, oder aus einheitlichen bifunktionellen Bausteinen, die je eine Amino- und Carboxylgruppe tragen oder ausbilden können. Polyamide werden beispielsweise durch Polykondensationsreaktionen von Diaminen mit Dicarbonsäuren oder von Aminocarbonsäuren bzw. durch ringöffnende Polymerisation von Lactamen hergestellt.

In der Regel werden Polyamide für Anwendungen, die einer hohen Schmelzesteifigkeit bedürfen, nach einem zweistufigen Verfahren hergestellt. Dabei erfolgt zunächst die Herstellung eines vergleichsweise niederviskosen Präpolymers in einem Druckreaktor, wie beispielsweise im Kunststoff-Handbuch, Band 3/4 Technische Thermoplaste, Polyamide; Hrsg. Becker, Braun; Carl Hanser Verlag, 1998, beschrieben. Das Vorprodukt, das auf diese Weise in der ersten Reaktionsstufe erhalten wird, wird anschließend durch Reaktion der verbliebenen Endgruppen auf den erforderlichen Endwert des Molekulargewichts angehoben, beispielsweise durch Festphasennachkondensation. Dem erhaltenen hochmolekularen Polyamid werden normalerweise Additive zugegeben, wie beispielsweise Leitfähigkeitsadditive, Stabilisatoren, Weichmacher, Nukleierungsmittel, Verarbeitungshilfsmittel, Farbmittel etc.; die so erhaltene Formmasse findet dann dort Anwendung, wo eine erhöhte Schmelzesteifigkeit erforderlich ist, unter anderem in der Rohrextrusion beim Blasformen oder beim Thermoformen. Nachteilig ist allerdings, dass die Anhebung des Molekulargewichts auf das erforderliche Niveau eine lange Reaktionszeit bzw. Verweilzeit benötigt, so dass hier zusätzliche Verfahrenskosten resultieren.

In der WO 00/66650 wird die Verwendung von Verbindungen mit mindestens zwei Carbonateinheiten zur Aufkondensierung von Polyamiden beschrieben, wobei die Eigenschaften sicher und stabil eingestellt werden können und die Möglichkeit eröffnet wird, eine Mehrfachverarbeitung des aufkondensierten Materials vorzunehmen, ohne dass es zu Gelbildung oder Inhomogenitäten kommt. Ein auf diesem Prinzip beruhendes Additiv zur Molekulargewichtseinstellung bei Polyamiden wird von der Fa. Brüggemann KG unter der Bezeichnung Brüggolen M1251 vertrieben. Primäre Anwendungen liegen im Bereich der Viskositätseinstellung für Recyclat aus PA6 oder PA66, das in Extrusionsformmassen wiederverwertet wird Bei dem Additiv Brüggolen M1251 handelt es sich um ein Masterbatch eines niedrigviskosen Polycarbonats, beispielsweise Lexan 141, in einem säureterminierten PA6. Für den Molekulargewichtsaufbau ist eine Reaktion der im aufzukondensierenden Material enthaltenen Aminoendgruppen mit dem Polycarbonat ursächlich.

Die Wirksamkeit der Methode wird in der WO 00/66650 am Beispiel der Aufkondensierung von PA6 und PA66 gezeigt, wobei die entsprechenden Polykondensate teilweise in reiner Form eingesetzt werden, teilweise aber auch Zuschlagstoffe wie z. B. Glasfasern und Montanat enthalten.

Bei der Extrusion großdimensionaler Geometrien (Rohre, Profile, weitere Hohlkörper) kann es jedoch, unter anderem bedingt durch die Gravitationskraft, nach dem Austritt aus dem Werkzeug zu diversen Schwierigkeiten kommen. Ein Durchhängen des austretenden Schmelzeschlauches ist hier ein optisches Zeichen für eine niedrige Schmelzeviskosität. Die Schwerkraft führt zu einer Verschiebung der Wanddicken, so dass eine unregelmäßige Verteilung der Wanddicke des Hohlkörpers auftreten kann. Zudem sind die erzielbaren Geometriegrößen und Geometrieformen bei der Profilextrusion stark begrenzt. Die Schmelzesteifigkeit herkömmlicher Polyamide reicht hier nicht aus, um die bevorzugten Geometrien technisch, wirtschaftlich, maßhaltig und zuverlässig herstellen zu können. Eine niedrige Schmelzesteifigkeit führt darüber hinaus zu einem unruhigen, instabilen Extrusionsverlauf, der sich dadurch äußern kann, dass der Schmelzestrang unruhig in die Kalibriereinheit einläuft. Dies kann zu Produktionsstörungen fuhren. Besitzt der Schmelzeschlauch nach Verlassen der Düse hingegen eine hohe Schmelzesteifigkeit, läuft er deutlich stabiler und wird unempfindlicher gegenüber äußeren Extrusionseinflüssen. Bei einer vertikalen Extrusion (z. B. Vorformling) darf sich der extrudierte Schmelzeschlauch nicht auslängen, wodurch die Wanddicke reduziert werden würde, und auch nicht abreißen. Die Größe der durch diese Extrusionstechnik produzierbaren Geometrien wird derzeit durch die Schmelzesteifigkeit des eingesetzten Polyamids limitiert. Um große Dimensionen extrudieren zu können, wird gerade hier eine hohe Schmelzesteifigkeit benötigt.

Die Extrusion einer Polyamidformmasse mit hoher Schmelzesteifigkeit ist wegen der hohen Viskosität jedoch schwierig. Hierfür ist ein außerordentlich hoher Druckaufbau in der Maschine notwendig; trotzdem können auch dann großdimensionale Geometrien nicht bei wirtschaftlich sinnvollen Extrusionsgeschwindigkeiten hergestellt werden, da schon bei kleineren Durchsätzen eine sehr hohe Motorlast vorliegt.

Die Aufgabe der vorliegenden Erfindung bestand darin, diese Nachteile zu vermeiden und ein Verfahren zur Verfügung zu stellen, das die wirtschaftliche Herstellung großer Geometrien gestattet. Diese Aufgabe wurde gelöst durch ein Verfahren zur Herstellung von Formteilen unter Aufkondensierung einer Polyamidformmasse mit einer Verbindung mit mindestens zwei Carbonateinheiten, wobei
a) eine Polyamidformmasse bereitgestellt wird,
b) eine Mischung der Polyamidformmasse und der Verbindung mit mindestens zwei Carbonateinheiten hergestellt wird,
c) die Mischung gegebenenfalls gelagert und/oder transportiert wird und
d) die Mischung anschließend zum Formteil verarbeitet wird, wobei erst in diesem Schritt die Aufkondensation erfolgt
und wobei das Formteil ein Hohlkörper oder Hohlprofil mit einem Außendurchmesser von mindestens 30 mm, bevorzugt mindestens 60 mm und insbesondere bevorzugt mindestens 110 mm und mit einer Wandstärke von mindestens 1 mm, bevorzugt mindestens 3 mm, besonders bevorzugt mindestens 6 mm und insbesondere bevorzugt mindestens 10 mm ist, und wobei das Formteil ein Gasleitungsrohr, eine Offshore-Leitung, eine Versorgungsleitung, ein Kabelkanal, eine Tankstellenversorgungsleitung, eine Belüftungsleitung oder ein Luftansangrohr ist.

Überraschenderweise wurde festgestellt, dass bei dieser Zugabeweise während der Verarbeitung eine signifikante Erhöhung der Schmelzesteifigkeit eintritt, bei gleichzeitig geringer Motorlast. Somit können trotz hoher Schmelzeviskosität hohe Durchsätze bei der Verarbeitung erzielt werden, woraus eine Verbesserung der Wirtschaftlichkeit des Herstellverfahrens resultiert.

Ein im Sinne der Erfindung geeignetes Polyamid ist auf Basis von Lactamen, Aminocarbonsäuren, Diaminen bzw. Dicarbonsäuren aufgebaut. Es kann darüber hinaus verzweigend wirkende Bausteine enthalten, die beispielsweise von Tricarbonsäuren, Triaminen oder Polyethylenimin abgeleitet sind. Geeignete Typen sind, jeweils als Homopolymer oder als Copolymer, beispielsweise PA6, PA46, PA66, PA610, PA66/6, PA6/6T, PA66/6T sowie insbesondere PA612, PA1010, PA1012, PA1212, PA613, PA1014, PA11, PA12 oder ein transparentes Polyamid. Bei transparenten Polyamiden kommen beispielsweise in Frage:
- das Polyamid aus Terephthalsäure und dem Isomerengemisch aus 2.2.4- und 2.4.4-Trimethylhexamethylendiamin,
- das Polyamid aus Isophthalsäure und 1.6-Hexamethylendiamin,
- das Copolyamid aus einem Gemisch aus Terephthalsäure/Isophthalsäure und 1.6-Hexamethylendiamin,
- das Copolyamid aus Isophthalsäure, 3.3'-Dimethyl-4.4'-diaminodicyclohexylmethan und Laurinlactam oder Caprolactam,
- das (Co)Polyamid aus 1.12-Dodecandisäure, 3.3'-Dimethyl-4.4'-diaminodicyclohexylmethan und gegebenenfalls Laurinlactam oder Caprolactam,
- das Copolyamid aus Isophthalsäure, 4.4'-Diaminodicyclohexylmethan und Laurinlactam oder Caprolactam,
- das Polyamid aus 1.12-Dodecandisäure und 4.4'-Diaminodicyclohexylmethan,
- das Copolyamid aus einem Terephthalsäure/Isophthalsäure-Gemisch, 3.3'-Dimethyl-4.4'-diaminodicyclohexylmethan und Laurinlactam.

Weiterhin sind Polyetheramide auf der Basis von Lactamen, Aminocarbonsäuren, Diaminen, Dicarbonsäuren und Polyetherdiaminen und/oder Polyetherdiolen geeignet.

Bevorzugt haben die Ausgangsverbindungen Molekulargewichte Mₙ von größer als 5000, insbesondere von größer als 8000. Hierbei werden Polyamide eingesetzt, deren Endgruppen zumindest teilweise als Aminogruppen vorliegen. Beispielsweise liegen mindestens 30 %, mindestens 40 %, mindestens 50 %, mindestens 60 %, mindestens 70 %, mindestens 80 % oder mindestens 90 % der Endgruppen als Aminoendgruppen vor. Die Herstellung von Polyamiden mit höherem Aminoendgruppengehalt unter Verwendung von Diaminen oder Polyaminen als Regler ist Stand der Technik. Im vorliegenden Fall wird bei der Herstellung des Polyamids bevorzugt ein aliphatisches, cycloaliphatisches oder araliphatisches Diamin mit 4 bis 44 C-Atomen als Regler eingesetzt. Geeignete Diamine sind beispielsweise Hexamethylendiamin, Decamethylendiamin, 2.2.4- bzw. 2.4.4-Trimethylhexamethylendiamin, Dodecamethylendiamin, 1.4-Diaminocyclohexan, 1.4- oder 1.3-Dimethylaminocyclohexan, 4.4'-Diaminodicyclohexylmethan, 4.4'-Diamino-3.3'dimethyldicyclohexylmethan, 4.4'-Diaminodicyclohexylpropan, Isophorondiamin, Metaxylylidendiamin oder Paraxylylidendiamin.

In einer weiteren bevorzugten Ausführungsform wird bei der Herstellung des Polyamids ein Polyamin als Regler und gleichzeitig Verzweiger eingesetzt. Beispiele hierfür sind Diethylentriamin, 1.5-Diamino-3-(β-aminoethyl)pentan, Tris(2-aminoethyl)amin, N,N-Bis(2-aminoethyl)-N',N'bis[2-[bis(2-aminoethyl)amino]-ethyl]-1,2-ethandiamin, Dendrimere sowie Polyethylenimine, insbesondere verzweigte Polyethylenimine, die durch Polymerisation von Aziridinen erhältlich sind (Houben-Weyl, Methoden der Organischen Chemie, Band E20, Seiten 1482 - 1487, Georg Thieme Verlag Stuttgart, 1987) und die in der Regel folgende Aminogruppenverteilung besitzen:
25 bis 46 % primäre Aminogruppen,
30 bis 45 % sekundäre Aminogruppen und
16 bis 40 % tertiäre Aminogruppen.

Im erfindungsgemäßen Verfahren wird mindestens eine Verbindung mit mindestens zwei Carbonateinheiten in einem Mengenverhältnis von 0,005 bis 10 Gew.-% eingesetzt, berechnet im Verhältnis zum eingesetzten Polyamid. Vorzugsweise liegt dieses Verhältnis im Bereich von 0,01 bis 5,0 Gew.-%, besonders bevorzugt im Bereich von 0,05 bis 3 Gew.-%. Der Begriff "Carbonat" bedeutet hier Ester der Kohlensäure insbesondere mit Phenolen oder Alkoholen.

Die Verbindung mit mindestens zwei Carbonateinheiten kann niedermolekular, oligomer oder polymer sein. Sie kann vollständig aus Carbonateinheiten bestehen oder sie kann noch weitere Einheiten aufweisen. Diese sind vorzugsweise Oligo- oder Polyamid-, -ester-, -ether-, -etheresteramid- oder -etheramideinheiten. Solche Verbindungen können durch bekannte Oligo- oder Polymerisationsverfahren bzw. durch polymeranaloge Umsetzungen hergestellt werden.

In einer bevorzugten Ausführungsform handelt es sich bei der Verbindung mit mindestens zwei Carbonateinheiten um ein Polycarbonat, beispielsweise auf Basis von Bisphenol A, bzw. um ein Blockcopolymeres, das einen derartigen Polycarbonatblock enthält.

Die Eindosierung der als Additiv verwendeten Verbindung mit mindestens zwei Carbonateinheiten in Form eines Masterbatches ermöglicht eine genauere Dosierung des Additivs, da größere Mengen verwendet werden. Es stellte sich zudem heraus, dass durch die Verwendung eines Masterbatches eine verbesserte Extrudatqualität erzielt wird. Das Masterbatch umfasst als Matrixmaterial bevorzugt das Polyamid, das auch im erfindungsgemäßen Verfahren aufkondensiert wird, oder ein damit verträgliches Polyamid, jedoch können auch unverträgliche Polyamide unter den Reaktionsbedingungen eine partielle Anbindung an das aufzukondensierende Polyamid erfahren, was eine Kompatibilisierung bewirkt Das als Matrixmaterial im Masterbatch verwendete Polyamid hat bevorzugt ein Molekulargewicht Mₙ von größer als 5000 und insbesondere von größer als 8000. Hierbei sind diejenigen Polyamide bevorzugt, deren Endgruppen überwiegend als Carbonsäuregruppen vorliegen. Beispielsweise liegen mindestens 80 %, mindestens 90 % oder mindestens 95 % der Endgruppen als Säuregruppen vor.

Die Konzentration der Verbindung mit mindestens zwei Carbonateinheiten im Masterbatch beträgt vorzugsweise 0,15 bis 50 Gew.-%, besonders bevorzugt 0,2 bis 25 Gew.-% und insbesondere bevorzugt 0,3 bis 15 Gew.-%. Die Herstellung eines solchen Masterbatches erfolgt in der üblichen, dem Fachmann bekannten Weise.

Geeignete Verbindungen mit mindestens zwei Carbonateinheiten sowie geeignete Masterbatches sind in der WO 00/66650, auf die hier ausdrücklich Bezug genommen wird, ausführlich beschrieben.

Die Erfindung ist anwendbar bei Polyamiden, die herstellungsbedingt mindestens 5 ppm Phosphor in Form einer sauren Verbindung enthalten. In diesem Fall wird der Polyamidformmasse vor der Compoundierung oder bei der Compoundierung 0,001 bis 10 Gew.-%, bezogen auf das Polyamid, eines Salzes einer schwachen Säure zugegeben. Geeignete Salze sind in der DE-A 103 37 707 offenbart, auf die hiermit ausdrücklich Bezug genommen wird, sowie in der hierzu äquivalenten EP-A-1512710.

Die Erfindung ist jedoch genausogut anwendbar bei Polyamiden, die herstellungsbedingt weniger als 5 ppm Phosphor oder gar keinen Phosphor in Form einer sauren Verbindung enthalten. In diesem Fall kann zwar, muss aber nicht ein entsprechendes Salz einer schwachen Säure zugegeben werden.

Im erfindungsgemäßen Verfahren können die üblichen Zuschlagstoffe verwendet werden, die bei der Herstellung von Polyamidformmassen Verwendung finden. Illustrative Beispiele hierfür sind Färbemittel, Flammverzögerer und -schutzmittel, Stabilisatoren, Füllstoffe, Gleitfähigkeitsverbesserer, Formentrennmittel, Schlagzähmodifikatoren, Weichmacher, Kristallisationsbeschleuniger, Antistatika, Schmiermittel, Verarbeitungshilfsmittel sowie weitere Polymere, die mit Polyamiden üblicherweise compoundiert werden.

Beispiele dieser Zuschlagstoffe sind wie folgt:
Färbemittel: Titandioxid, Bleiweiß, Zinkweiß, Liptone, Antimonweiß, Ruß, Eisenoxidschwarz, Manganschwarz, Kobaltschwarz, Antimonschwarz, Bleichromat, Mennige, Zinkgelb, Zinkgrün, Cadmiumrot, Kobaltblau, Berliner Blau, Ultramarin, Manganviolett, Cadmiumgelb, Schweinfurter Grün, Molybdänorange und -rot, Chromorange und -rot, Eisenoxidrot, Chromoxidgrün, Strontiumgelb, Molybdänblau, Kreide, Ocker, Umbra, Grünerde, Terra di Siena gebrannt, Graphit oder lösliche organische Farbstoffe.
Flammverzögerer und Flammschutzmittel: Antimontrioxid, Hexabromcyclododecan, Tetrachlor- oder Tetrabrombisphenol und halogenierte Phosphate, Borate, Chlorparaffine sowie roter Phosphor, ferner Stannate, Melamincyanurat und dessen Kondensationsprodukte wie Melam, Melern, Melon, Melaminverbindungen wie Melaminpyro- und polyphosphat, Ammoniumpolyphosphat, Aluminiumhydroxid, Calciumhydroxid sowie phosphororganische Verbindungen, die keine Halogene enthalten wie beispielsweise Resorcinoldiphenylphosphat oder Phosphonsäureester.
Stabilisatoren: Metallsalze, insbesondere Kupfersalze und Molybdänsalze sowie Kupferkomplexe, Phosphite, sterisch gehinderte Phenole, sekundäre Amine, UV-Absorber und HALS-Stabilisatoren.
Füllstoffe: Glasfasern, Glaskugeln, Mahlglasfaser, Kieselgur, Talkum, Kaolin, Tone, CaF₂, Aluminiumoxide sowie Kohlefasern.
Gleitfähigkeitsverbesserer und Schmiermittel: MoS₂, Paraffine, Fettalkohole sowie Fettsäureamide.
Formentrennmittel und Verarbeitungshilfsstoffe: Wachse (Montanate), Montansäurewachse, Montanesterwachse, Polysiloxane, Polyvinylalkohol, SiO₂, Calciumsilikate sowie Perfluorpolyether.
Weichmacher: BBSA, POBO.
Schlagzähmodifikatoren: Polybutadien, EPM, EPDM, HDPE, Acrylatkautschuk.
Antistatika: Ruß, Carbonfasern, Graphitfibrillen, mehrwertige Alkohole, Fettsäureester, Amine, Säureamide, quarternäre Ammoniumsalze.
Weitere Polymere: ABS, Polypropylen.

Diese Zuschlagstoffe können in den üblichen, dem Fachmann bekannten Mengen verwendet werden.

Die Verbindung mit mindestens zwei Carbonateinheiten wird als solche oder als Masterbatch erfindungsgemäß erst nach der Compoundierung, aber spätestens während der Verarbeitung zugegeben. Bevorzugt mischt man bei der Verarbeitung das aufzukondensierende Polyamid bzw. die aufzukondensierende Polyamidformmasse als Granulat mit dem Granulat der Verbindung mit mindestens zwei Carbonateinheiten oder dem entsprechenden Masterbatch. Es kann aber auch eine Granulatmischung der fertig compoundierten Polyamidformmasse mit der Verbindung mit mindestens zwei Carbonateinheiten bzw. dem Masterbatch hergestellt, anschließend transportiert oder gelagert und danach verarbeitet werden. Entsprechend kann natürlich auch mit Pulvermischungen verfahren werden. Entscheidend ist, dass die Mischung erst bei der Verarbeitung aufgeschmolzen wird. Eine gründliche Vermischung der Schmelze bei der Verarbeitung ist empfehlenswert. Das Masterbatch kann genauso gut jedoch auch als Schmelzestrom mit Hilfe eines beigestellten Extruders in die Schmelze der zu verarbeitenden Polyamidformmasse zudosiert und dann gründlich eingemischt werden.

Die erfindungsgemäß hergestellten Formteile sind herstellbar beispielsweise durch Extrusion, Coextrusion oder Blasformen einschließlich Saugblasformen, 3-D-Blasformen, Schlaucheinlege- und Schlauchmanipulationsverfahren. Diese Verfahren sind Stand der Technik.

Die Wandung dieser Hohlkörper oder Hohlprofile kann hierbei entweder einschichtig sein und in diesem Fall vollständig aus der anspruchsgemäß verwendeten Formmasse bestehen, sie kann aber auch mehrschichtig sein, wobei die erfindungsgemäß verwendete Formmasse die Außenschicht, die Innenschicht und/oder die Mittelschicht bilden kann. Die andere Schicht bzw. die anderen Schichten bestehen aus Formmassen auf Basis anderer Polymerer, beispielsweise von Polyethylen, Polypropylen, Fluorpolymeren, oder aus Metall, beispielsweise Stahl. Beispielsweise sind Offshore-Leitungen meist mehrschichtig aufgebaut; sie bestehen in der Regel aus einer Stahlstruktur, die sowohl zur Innenseite als auch zur Außenseite des Rohres durch Polymerschichten gegenüber Medien geschützt ist

Im Folgenden soll die Erfindung beispielhaft erläutert werden. In den Versuchen wurden folgende Materialien eingesetzt:
- Amingeregeltes PA12: mit 50 mäq/kg NH₂-Gruppen und 9 mäq/kg COOH-Gruppen, ηᵣₑₗ ca. 2,15. Enthält herstellungsbedingt 54,5 ppm Phosphor.
- Säuregeregeltes PA12: mit 8 mäq/kg NH₂-Gruppen und 50 mäq/kg COOH-Gruppen, ηᵣₑₗ ca. 2,15. Enthält herstellungsbedingt 54,5 ppm Phosphor.
- Brüggolen^{®} M1251,: eine Mischung aus einem niederviskosen Polycarbonat und einem säureterminierten PA6.
- Ceasit^{®} PC: (Calciumstearat).

Auf einem Zweischneckenextruder vom Typ Werner & Pfleiderer ZSK 30 wurden die in der Tabelle 1 angegebenen Compounds hergestellt.

### Vergleichsbeispiele A und B sowie Beispiel 1:

Auf einem 50er Reifenhäuser Einschneckenextruder mit Dreizonenschnecke und L = 25 D wurden die in der Tabelle 2 angegebenen Einsatzstoffe ausgehend vom Granulat bzw. einer Granulatmischung verarbeitet und als Rohre mit einer Wandstärke von 2,9 mm und einem Außendurchmesser von 32 mm extrudiert. Bei der Gegenüberstellung des Vergleichsbeispiels B und des Beispiels 1 erkennt man, dass erfindungsgemäß eine deutlich niedrigere Motorlast nötig war, um ein Rohr aus einem sehr hochmolekularen Polyamid herzustellen.
Beim direkten Einsatz des Compound B verringert sich ηᵣₑₗ (als Maßstab für das Molekulargewicht) von anfangs 2,55 auf 2,30 (Vergleichsbeispiel B) durch Kettenabbau unter Scherung. Beim erfindungsgemäßen Verfahren (Beispiel 1) ist kein derartiger Kettenabbau festzustellen.

**Tabelle 1: Herstellung der Compounds**

| | **Compound A** | **Compound B** | **Batch 1** | **Batch 2** |
|---|---|---|---|---|
| Amingeregeltes PA12 [Gew.-%] | 60 | 99,3 | 99,9 | 0 |
| Säuregeregeltes PA12 [Gew.-%] | 40 | 0 | 0 | 98,4 |
| Brüggolen M1251 [Gew.-%] | 0 | 0,6 | 0 | 1,5 |
| CeasitPC[Gew.-%] | 0 | 0,1 | 0,1 | 0,1 |
| Durchsatz [kg/h] | 10 | 10 | 10 | 10 |
| Schergeschwindigkeit [1/min] | 250 | 250 | 250 | 250 |
| Schmelzetemperatur [°C] | 251 | 259 | 249 | 251 |
| Schmelzedruck [bar] | 33 | 62 | 35 | 34 |
| Motorleistung [%] | 73 | 96 | 78 | 72 |
| ηᵣₑₗ gemäß DIN EN ISO 307 | 2,11 | 2,55 | 2,10 | 2,12 |

**Tabelle 2: Verarbeitung zu Rohren**

| | **Compound A** | **Compound B** | **Beispiel 1** |
|---|---|---|---|
| Compound A [Gew.-%] | 100 | 0 | 0 |
| Compound B [Gew.-%] | 0 | 100 | 0 |
| Batch 1 [Gew.%] | 0 | 0 | 60 |
| Batch 2 [Gew.%] | 0 | 0 | 40 |
| Schergeschwindigkeit [1/min] | 37 | 37 | 37 |
| Abzugsgeschwindigkeit [m/min] | 2,3 | 2,3 | 2,3 |
| Schmelzetemperatur [°C] | 242 | 255 | 247 |
| Schmelzedruck [bar] | 58 | 97 | 119 |
| Motorleistung [%] | 66 | 94 | 70 |
| ηᵣₑₗ gemäß DIN EN ISO 307 | 2,08 | 2,30 | 2,51 |

## Patentansprüche

1. Verfahren zur Herstellung von Formteilen unter Aufkondensierung einer Polyamidformmasse mit einer Verbindung mit mindestens zwei Carbonateinheiten, wobei
a) eine Polyamidformmasse bereitgestellt wird,
b) eine Mischung der Polyamidformmasse und 0,005 bis 10 Gew.-%, bezogen auf das eingesetzte Polyamid, der Verbindung mit mindestens zwei Carbonateinheiten hergestellt wird,
c) die Mischung gegebenenfalls gelagert und/oder transportiert wird und
d) die Mischung anschließend zum Formteil verarbeitet wird, wobei erst in diesem Schritt die Mischung der Polyamidformmasse und der Verbindung mit mindestens zwei Carbonateinheiten aufgeschmolzen wird und dabei die Aufkondensation erfolgt
und wobei weiterhin das Formteil ein Hohlkörper oder Hohlprofil mit einem Außendurchmesser von mindestens 30 mm und mit einer Wandstärke von mindestens 1 mm ist und das Formteil ausgewählt ist aus der Gruppe Gasleitungsrohr, Offshore-Leitung, Versorgungsleitung, Kabelkanal, Tankstellenversorgungsleitung, Belüftungsleitung und Luftansaugrohr.

2. Verfahren gemäß Anspruch 1,
**dadurch gekennzeichnet,**
**dass** das Polyamid unter Verwendung eines Diamins oder Polyamins als Regler hergestellt wurde.

3. Verfahren gemäß einem der vorhergehenden Ansprüche,
**dadurch gekennzeichnet,**
**dass** die Verbindung mit mindestens zwei Carbonateinheiten als Masterbatch eingesetzt wird.

4. Formteil, hergestellt gemäß einem der vorhergehenden Ansprüche.

5. Formteil gemäß Anspruch 4,
**dadurch gekennzeichnet,**
**dass** seine Wandung mehrschichtig aufgebaut ist.

## Claims

1. Process for producing moldings with condensing-up of a polyamide molding composition by means of a compound having at least two carbonate units, wherein
a) a polyamide molding composition is made available,
b) a mixture of the polyamide molding composition and from 0.005 to 10% by weight, based on the polyamide used, of the compound having at least two carbonate units is prepared,
c) the mixture is optionally stored and/or transported and
d) the mixture is subsequently processed to produce the molding, and it is only in this step that the mixture of the polyamide molding composition and the compound having at least two carbonate units is melted and condensing up occurs,
and the molding is a hollow body or hollow profile having an external diameter of at least 30 mm and a wall thickness of at least 1 mm and the molding is selected from the group consisting of a gas pipe, an offshore pipeline, a supply line, a cable conduit, a filling station supply line, a ventilation line and an air intake pipe.

2. Process according to Claim 1,
**characterized in that**
the polyamide has been prepared using a diamine or polyamine as regulator.

3. Process according to either of the preceding claims,
**characterized in that**
the compound having at least two carbonate units is used as a masterbatch.

4. Molding produced according to any of the preceding claims.

5. Molding according to Claim 4,
**characterized in that**
its wall has a multilayer structure.

## Revendications

1. Procédé pour la préparation de pièces moulées avec condensation d'une masse de moulage en polyamide avec un composé présentant au moins deux unités carbonate, où
a) on prépare une masse de moulage en polyamide,
b) on prépare un mélange de la masse de moulage en polyamide et de 0,005 à 10% en poids, par rapport au polyamide utilisé, du composé comprenant au moins deux unités carbonate,
c) on entrepose et/ou on transporte le cas échéant le mélange et
d) on transforme ensuite le mélange en pièce moulée, où on fond, dans une première étape, le mélange de la masse de moulage en polyamide et du composé comprenant au moins deux unités carbonate, la condensation se produisant
et où, en outre, la pièce moulée est un corps creux ou un profilé creux présentant un diamètre extérieur d'au moins 30 mm et une épaisseur de paroi d'au moins 1 mm et la pièce moulée est choisie dans le groupe des conduites de gaz, des conduites offshore, des conduites d'alimentation, des canalisations d'électricité, des conduites d'alimentation des stations-service, des conduites d'aération et des tuyaux d'aspiration de l'air.

2. Procédé selon la revendication 1, **caractérisé**
**en ce que** le polyamide est préparé avec utilisation d'une diamine ou d'une polyamine comme agent de régulation.

3. Procédé selon l'une quelconque des revendications précédentes, **caractérisé**
**en ce que** le composé comprenant au moins deux unités carbonate est utilisé comme lot-maître.

4. Pièce moulée, préparée selon l'une quelconque des revendications précédentes.

5. Pièce moulée selon la revendication 4, **caractérisée**
**en ce que** sa paroi est une structure à plusieurs couches.
